# EUROPÄISCHE PATENTSCHRIFT

(11) **EP 0 978 166 B1**
(45) Veröffentlichungstag und Bekanntmachung des Hinweises auf die Patenterteilung: **31.10.2001**
(21) Anmeldenummer: 98931956.1
(22) Anmeldetag: 20.04.1998
(51) Int. Cl.: H04B 1/16, H04Q 7/32

(54) **ENDGERAT FÜR DEN DIGITALEN MOBILFUNK UND VERFAHREN ZUM AUSWERTEN VON IN EINEM SOLCHEN ENDGERÄT EMPFANGENEN DATEN**
TERMINAL UNIT FOR DIGITAL MOBILE RADIOTELEPHONE COMMUNICATION AND METHOD FOR EVALUATING DATA RECEIVED IN A TERMINAL UNIT OF THIS TYPE
TERMINAL POUR LA COMMUNICATION RADIOTELEPHONIQUE MOBILE NUMERIQUE ET PROCEDE POUR EVALUER DES DONNEES RE UES DANS UN TERMINAL DE CE TYPE

(30) Priorität: 24.04.1997 DE 19717383
(43) Veröffentlichungstag der Anmeldung: 09.02.2000
(73) Patentinhaber: SIEMENS AKTIENGESELLSCHAFT, 80333 München (DE)
(72) Erfinder: RAAF, Bernhard, D-81475 München (DE); MEYER, Jan, D-82362 Weilheim (DE)
(86) Internationale Anmeldenummer: DE9801101
(87) Internationale Veröffentlichungsnummer: WO9848521

(56) Entgegenhaltungen:
- WO-A-94/08432
- WO-A-94/27377
- WO-A-96/37051
- WO-A-97/20446

## Beschreibung

Die vorliegende Erfindung betrifft ein Endgerät für den digitalen Mobilfunk und ein Verfahren zum Auswerten empfangener Daten in einem Endgerät für den digitalen Mobilfunk, die eine Möglichkeit zur Verringerung des Stromverbrauches bei Empfang unwichtiger Informationen bieten.

Im digitalen Mobilfunk werden in der Regel Zeitmultiplex-Verfahren zur Übertragung der Daten verwendet. Dabei wird die auf einem zwischen Basisstationen und Mobilstationen übertragenen Trägersignal vorhandene Bandbreite zeitlich zwischen den verschiedenen Teilnehmern aufgeteilt. Häufig werden Zeitmultiplex- und Frequenzmultiplex-Verfahren derart kombiniert, daß es mehrere Trägerfrequenzen gibt, auf die dann jeweils getrennt nach dem Zeitmultiplex-Verfahren zugegriffen wird. So werden z. B. im GSM-System (Global System for Mobile Communications) Trägerfrequenzen mit jeweils 200 kHz Abstand zueinander verwendet, die ihrerseits wieder in je acht Zeitschlitze oder Datenpakete unterteilt sind. Dabei werden den Mobilstationen von den Basisstationen häufig Daten übertragen, die nur für eine einzige oder keine der Mobilstationen wichtig sind. Das kann umgekehrt aber auch Datenpakete betreffen, die von einer Mobilstation an eine Basisstation gesendet werden. Unwichtige Datenpakete können hierbei Datenpakete sein, die sogenannte Leer- oder Fülldaten enthalten, es können aber auch Datenpakete sein, die Informationen enthalten, die das empfangende Endgerät nicht betreffen bzw. nicht mehr betreffen, da das Endgerät sie z. B. schon einmal empfangen hat. Im Stand der Technik werden dabei alle übermittelten Daten von dem empfangenden Endgerät empfangen und verarbeitet unabhängig davon, ob die Daten von dem Endgerät benötigt werden oder nicht. Das hat einen erhöhten Stromver brauch im Endgerät zur Folge, was insbesondere bei Batterie- oder Akku-betriebenen Mobilstationen nachteilig ist.

WO96/37051 offenbart ein Verfahren und eine Vorrichtung zum Sparen von Strom in tragbaren batteriegetriebenen Radiogeräten. Dabei wird eine empfangene Nachricht mit einer vorhergehenden empfangenen Nachricht verglichen. Falls die beiden Nachrichten übereinstimmen, wird das Radiogerät in einen Stromsparzustand versetzt, in dem die spätere empfangene Nachricht nicht weiter verarbeitet wird. WO94/08432 offenbart ein Verfahren zum Übertragen von Informationen zwischen einer Basisstation und einer Mobilstation in einem digitalen Steuerkanal eines Telekommunikationssystems. Dabei übertragt die Basisstation Änderungs-Kennzeichen, die anzeigen, ob sich aufeinanderfolgende Nachrichten unterscheiden. Die Mobilstation verarbeitet empfangene Nachrichten nur dann, wenn ein vorhergehendes Änderungs-Kennzeichen eine Änderung im Vergleich zu den vorhergehenden Nachrichten anzeigt. WO94/27377 offenbart eine Mobilstation für den Mobilfunk, mit einer Empfangseinrichtung zum Empfangen von digitalen Datenpaketen und Bereitstellen von Soft-Decision-Werten empfangener Datenpakete, und einer Entscheidungseinrichtung, die vor dem vollständigen Empfang einer aus einem oder mehreren Datenpaketen bestehenden Informationseinheit auf der Basis eines bereits empfangenen Teiles der Informationseinheit entscheidet, ob die Informationseinheit wichtig ist oder nicht, und bei einer Entscheidung, daß die Informationseinheit unwichtig ist, die Empfangseinheit zum Ignorieren des Restes der Informationseinheit veranlaßt. Dabei werden die Soft-Decision-Werte verwendet, um festzustellen, ob ein empfangenes Datenpaket fehlerhaft ist oder nicht. Falls das Datenpaket fehlerfrei ist, wird ein Stromsparsignal erzeugt. Das empfangene Datenpaket wird weiterhin mit erwarteten oder vorgegebenen Daten verglichen, um festzustellen, ob das Datenpaket unwichtige oder wichtige Informationen für die Mobilstation enthält. Falls die Informationen unwichtig sind, wird die Mobilstation in einen Stromsparzustand geschaltet, in dem der Rest der empfangenen Datenpakete nicht weiter verarbeitet wird.

Die Aufgabe der vorliegenden Erfindung ist demgegenüber, ein Endgerät für den digitalen Mobilfunk gemäß dem Oberbegriff des Anspruches 1 und ein Verfahren zum Auswerten von in einem Endgerät für den digitalen Mobilfunk empfangenen Daten gemäß dem Oberbegriff des Anspruches 11 bereitzustellen, die eine einfachere und effizientere Möglichkeit zur Stromeinsparung bereitstellen.

Diese Aufgabe wird durch ein Endgerät für den digitalen Mobilfunk gemäß Anspruch 1 und ein Verfahren zum Auswerten von in einem Endgerät für den digitalen Mobilfunk empfangenen Daten gemäß Anspruch 11 gelöst.

Gemäß der vorliegenden Erfindung wird nicht abgewartet, bis eine Informationseinheit vollständig empfangen worden ist, sondern es wird bereits frühzeitig aufgrund eines bereits empfangenen Teiles einer Informationseinheit ausgewertet, ob die übertragene Informationseinheit für das betreffende Endgerät wichtig ist oder nicht. Ist die Informationseinheit für das betreffende Endgerät unwichtig, so wird der Empfang des Restes der Informationseinheit abgebrochen. Der Rest einer als unwichtig erkannten Informationseinheit muß somit nicht mehr empfangen und nachfolgend verarbeitet werden, wodurch eine erhebliche Verringerung des Stromverbrauches in dem Endgerät erzielt wird. Das erfindungsgemäße Endgerät kann eine Basisstation oder eine Mobilstation sein. Insbesondere bei einer Batterie- oder Akku-betriebenden Mobilstation ist der durch die vorliegende Erfindung ermöglichte verringerte Stromverbrauch von großer Bedeutung.

Weiterhin ist die vorliegende Erfindung unabhängig davon, in welchem System die Übertragung der Daten erfolgt. Zum Beispiel ist die vorliegende Erfindung ebenso im GSM-System wie im DECT-System (Digital European Cordless Telephone) anwendbar, wobei bei beiden Systemen die Übertragung der digitalen Daten im Zeitmultiplex-Verfahren erfolgt. Die Übertragung der Daten im Zeitmultiplex-Verfahren erfolgt in sogenannten Zeitschlitzen, die jeweils ein Datenpaket enthalten. Im GSM-System enthält jeder Zeitrahmen acht Zeitschlitze bzw. Datenpakete, während im DECT-System pro Rahmen jeweils zwölf Zeitschlitze bzw. Datenpakete zum Senden und Empfangen vorgesehen sind.

Die vorliegende Erfindung ermöglicht es, aus einem oder mehreren Datenpakete bestehende Informationseinheiten bereits nach dem Empfang eines Teiles der Informationseinheit zu ignorieren, wenn die Informationseinheit als unwichtig erkannt wird. Dabei wird demgemäß bereits nach dem Empfang eines Datenpaketes oder eines Teiles eines Datenpaketes entschieden, ob die zugehörige Informationseinheit wichtig ist oder nicht.

Im GSM-System ist z. B. ein Signalisierungskanal oder mit anderen Worten eine Signalisierungsdaten enthaltende Informationseinheit vorgesehen, die von einer Basisstation mehrmals pro 1 s an die Mobilstationen übertragen wird. Die Signalisierungs-Informationseinheit ist dabei auf vier Zeitschlitze verteilt, wobei je ein Zeitschlitz in einem von vier aufeinander folgenden Zeitrahmen übertragen wird, d. h. die Informationseinheit wird in zeitlich getrennten Blöcken übertragen. Bereits nach dem Empfang des ersten von vier Datenpaketen kann mittels der vorliegenden Erfindung der Empfang und damit die Verarbeitung der restlichen drei Datenpakete vermieden werden, wenn die Informationseinheit auf der Basis des ersten empfangenen Datenpaketes als unwichtig erkannt wird.

Unwichtig im Sinne der vorliegenden Erfindung sind dabei alle Informationseinheiten, die Daten enthalten, die für das empfangende Endgerät ohne Bedeutung sind oder von diesem nicht oder nicht mehr benötigt werden. Das können z. B. Leerdaten bzw. Fülldaten enthaltende Informationseinheiten sein, die beispielsweise von einer Mobilstation immer dann ausgesendet werden, wenn keine Verbindung zu vermitteln ist und somit keine Daten im Signalisierungskanal übertragen werden müssen. Weiterhin kann es sich bei unwichtigen Informationseinheiten um Daten handeln, die von dem empfangenen Endgerät schon einmal empfangen wurden, aber nicht noch einmal benötigt werden. Eine weitere Möglichkeit für unwichtige Informationseinheiten sind Daten, die das empfangende Endgerät nicht betreffen, sondern nur andere Endgeräte.

Gemäß der vorliegenden Erfindung wird dabei die Entscheidung, ob die Informationseinheit wichtig ist oder nicht, auf der Basis eines Wahrscheinlichkeitswertes getroffen, der aus den Soft-Decision-Werten des bereits empfangenen Teiles der Informationseinheit berechnet wird. Soft-Decision-Werte eines digitalen Signales werden durch einen Equalizer in der Empfangseinheit von Endgeräten zur Verfügung gestellt und enthalten Informationen über die statistische Sicherheit des übermittelten digitalen Wertes. Mit anderen Worten gibt der Soft-Decision-Wert eines empfangenen digitalen Signales einen Wahrscheinlichkeitswert dafür an, ob das digitale Signal korrekt übertragen wurde. Erfindungsgemäß wird somit mittels der Soft-Decision-Werte des bereits empfangenen Teiles der Informationseinheit, die ein Maß für die Richtigkeit der empfangenen Daten sind, ein Wahrscheinlichkeitswert berechnet. Dieser Wahrscheinlichkeitswert dient als Grundlage der Entscheidung, ob die Informationseinheit als unwichtig erkannt wird oder nicht. Wenn demgemäß eine ausreichend hohe Wahrscheinlichkeit dafür besteht, daß die Informationseinheit unwichtig ist, wird entschieden, daß der Rest der Informationseinheit ignoriert werden soll. Es wird sozusagen aus der Qualitätsinformation über den bereits empfangenen Teil eine Wahrscheinlichkeit berechnet, daß die Informationseinheit unwichtig ist.

Vorteilhafte Ausgestaltungen der vorliegenden Erfindung sind in den Unteransprüchen 2 bis 10 bzw. 12 bis 20 angegeben.

Vorzugsweise wird das erfindungsgemäße Endgerät im GSM-System betrieben bzw. bezieht sich das erfindungsgemäße Verfahren auf ein im GSM-System betriebenes Endgerät. Die Informationseinheit wird dabei in einem Übertragungskanal für Signalisierungsdaten übertragen, wobei unwichtige Informationsdaten Fülldaten oder im Endgerät nicht bzw. nicht mehr benötigte Signalisierungsdaten sind.

In einer ersten bevorzugten Ausgestaltung der vorliegenden Erfindung wird die Entscheidung, ob die Informationseinheit wichtig ist oder nicht, durch die Auswertung des Informationsgehaltes des bereits empfangenen Teiles der Informationseinheit und durch den Vergleich dieses Informationsgehaltes mit in einer Speichereinrichtung des Endgerätes gespeicherten Informationen getroffen. Es können dabei jeweils bestimmte Teile wie z. B. Bits der Informationseinheit betrachtet werden, deren Informationsgehalt festgelegt ist und z. B. die Länge der Informationseinheit oder das Format der Informationseinheit spezifizierten.

Die erste Ausgestaltung der vorliegenden Erfindung ist in solchen Fällen besonders geeignet, in denen die übertragenen Daten mit einem Kodierungsverfahren kodiert sind, bei dem die Nutz-Bits wie z. B. die Signalisierungsbits nur einen gewissen, relativ eng lokalisierten Teil der insgesamten übertragenen kodierten Bits beeinflußen. Ein Beispiel dafür ist der im GSM-System verwendete Convolutional Code, bei dem ein Nutz-Bit ca. acht kodierte Bits beinflußt.

In einer zweiten vorteilhaften Ausgestaltung der vorliegenden Erfindung wird der bereits empfangene Teil der Informationseinheit mit in einer Speichereinrichtung des Endgerätes gespeicherten Informationen verglichen, um zu entscheiden, ob die Informationseinheit wichtig ist oder nicht. Im Unterschied zur ersten bevorzugten Ausgestaltung erfolgt hier keine Auswertung des bereits empfangenen Teiles auf seinen Informationsgehalt. In der Speichereinheit gemäß der zweiten Ausgestaltung kann dabei beispielsweise der entsprechende Teil einer erwarteten unwichtigen Informationseinheit gespeichert sein. Eine derartige unwichtige Informationseinheit kann z.B. aus Fülldaten bestehen. Üblicherweise sind die von einer bestimmten Basisstation ausgesendeten Fülldaten eines Rahmens immer gleich, so daß durch einen Vergleich des bereits empfangenen Teiles der Informationseinheit mit dem empfangenen Teiles der Informationseinheit mit dem entsprechenden gespeicherten Teil der erwarteten unwichtigen Informationseinheit eine Entscheidung gefällt werden kann.

Diese zweite Ausgestaltung ist besonders in solchen Fällen geeignet, in denen die übertragenden Daten mit einem Kodierungsverfahren kodiert sind, in dem die Nutz-Bits einen sehr großen Bereich der übertragenen kodierten Bits beeinflussen. Ein Beispiel dafür ist der im GSM-System verwendete Fire Code, in dem ein Nutz-Bit bis zu 80 kodierte Bits beeinflußt. Die zweite Ausgestaltung setzt jedoch voraus, daß die erwartete unwichtige Informationseinheit von vornherein vollständig bekannt, d. h. vollständig spezifiziert ist.

In einer dritten vorteilhaften Ausgestaltung der vorliegenden Erfindung wird daher ein Teil einer vorher empfangenen Informationseinheit in einer temporären Speichereinrichtung des Endgerätes abgespeichert und mit dem empfangenen Teil einer aktuellen Informationseinheit verglichen, um zu entscheiden, ob die aktuelle Informationseinheit wichtig ist oder nicht. Falls daher eine erwartete unwichtige Informationseinheit bzw. Teile davon nicht genau bekannt bzw. spezifiziert sind, wird eine vorempfangene Informationseinheit oder ein Teil davon temporär gespeichert. Die vorher empfangene Informationseinheit kann dabei z. B. nach vollständigem Empfang und vollständiger Dekodierung im Endgerät als unwichtig beurteilt bzw. erkannt worden sein, oder sie kann im nachhinein unwichtig geworden sein. Das kann Wiederholungen von bereits empfangenen Informationseinheiten betreffen, die das Endgerät nicht mehr benötigt, wie z. B. bereits empfangene und ausgewertete Signalisierungsdaten. Beispielsweise werden in GSM-Systemen von den Basisstationen Anfragen zur Verbindungsaufnahme (Paging-Reguests ) häufiger als nur ein einziges Mal gesendet, um eine höhere Wahrscheinlichkeit der Erreichbarkeit zu gewährleisten. Hat eine Mobilstation eine derartige Anfrage bereits empfangen und ausgewertet, so können die entsprechenden Informationen in dem temporären Speicher gespeichert werden, um den nochmaligen Empfang der selben Daten zu vermeiden.

In einer vierten bevorzugten Ausgestaltung der vorliegenden Erfindung enthält der bereits empfangene Teil der Informationseinheit Informationen darüber, ob die Informationseinheit wichtig ist oder nicht, und das Endgerät wertet diese Informationen aus, um die entsprechende Entscheidung zu treffen. Beispielsweise kann der bereits empfangene Teil der Informationseinheit Informationen darüber enthalten, ob die Informationseinheit Fülldaten oder Nutzdaten wie z. B. Signalisierungsdaten enthält. Im GSM-System werden dafür vorzugsweise die sogenannten Stealing Flags irgend eines Signalisierungskanals außer dem FACCH-Kanal verwendet, die je zwei Bits pro Datenpaket ausmachen. Das kann z. B. der CCCH-Kanal (Common Control Channel) sein. Damit kann in dieser Ausgestaltung bereits nach Detektion der Stealing Flags entschieden werden, ob die Informationseinheit wichtig ist oder nicht, und der Empfänger kann noch während der Übertragung des Restes des Datenpaketes abgeschaltet werden.

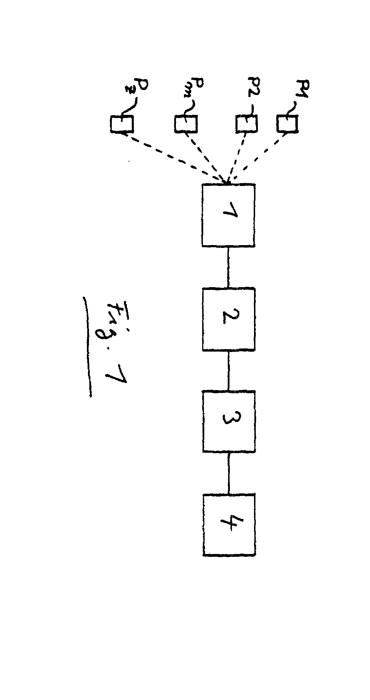

Die vorliegende Erfindung wird nachfolgend anhand bevorzugter Ausführungsbeispiele unter Bezug auf die beigefügte Zeichnung näher erläutert, in der die einzige Figur 1 den Aufbau eines erfindungsgemäßen Endgerätes für den digitalen Mobilfunk darstellt.

Wie in Fig. 1 dargestellt ist, umfaßt ein erfindungsgemäßes Endgerät für den digitalen Mobilfunk eine Empfangseinheit 1 und eine Entscheidungseinheit 2, an die sich ein De-Interleaver 3 und Kanaldekodierer 4 anschließen. Die dargestellten Elemente sind in der Empfangseinheit des Endgerätes angeordnet, wobei das Endgerät selbstverständlich weitere Elemente zur Verarbeitung der empfangenen Daten sowie eine Sendeeinheit etc. enthält, die aber für die vorliegende Erfindung keine weitere Bedeutung haben.

Die Sendeeinrichtung, von der das Endgerät Daten erhält, umfaßt entsprechend unter anderem einen Kanalkodierer, einen Interleaver und eine Sendeeinrichtung. Die Sendeeinheit kann z. B. eine Basisstation sein, während das erfindungsgemäße Endgerät z. B. eine Mobilstation sein kann. Das Endgerät kann aber auch eine Basisstation sein, während die Sendeeinheit eine Mobilstation ist. Im Kanalkodierer werden die zu übertragenden Daten beispielsweise durch einen Block- oder einen Faltungskode kodiert, während die im Endgerät empfangenen kodierten Daten im dortigen Kanaldekodierer 4 entsprechend dekodiert werden. Im Interleaver des Senders erfolgt eine Umordnung und zeitliche Spreizung der zu übertragenden Daten, um gegebenenfalls in den Daten enthaltene Fehler statistisch zu verteilen, da die meisten Block- oder Faltungskodes nur statistisch unabhängige Einzelfehler unterdrücken können. Im De-Interleaver 3 des empfangenden Endgerätes erfolgt die entsprechende Wiederherstellung der Ordnung der empfangenen Daten.

Die Sendeeinheit überträgt die Daten im Zeitmultiplex-Verfahren, d. h. die Daten werden jeweils in Zeitrahmen übertragen, die in eine bestimmte Anzahl von Zeitschlitzen unterteilt sind. Jeder Zeitschlitz enthält ein entsprechendes Datenpaket. In der Regel erfolgt die Übertragung von Daten auf mehreren Trägerfrequenzen, auf die dann getrennt nach dem Zeitmultiplex-Verfahren zugegriffen wird, so daß die Übertragung durch eine Kombination von Zeitmultiplex- und Frequenzmultiplexverfahren erfolgt. Die in Fig. 1 dargestellte Empfangseinrichtung 1 empfängt somit Informationseinheiten, die aus einem oder mehreren Datenpaketen P1, P2 ...Pm ... Pz bestehen. Jedes Datenpaket P1, P2 ... Pz wird dabei in einem zugeordneten Zeitschlitz übertragen. Die Entscheidungseinrichtung 2 entscheidet vor dem vollständigen Empfang einer aus einem oder mehreren Datenpaketen P1, P2 ... Pz bestehenden Informationseinheit auf der Basis eines bereits empfangenen Teiles der Informationseinheit, ob die Informationseinheit wichtig ist oder nicht. Bei einer Entscheidung, daß die Informationseinheit unwichtig ist, übermittelt die Entscheidungseinrichtung 2 der Empfangseinheit 1 ein Signal zum Ignorieren des Restes der Informationseinheit. Die Empfangseinheit 1 bricht daraufhin den Empfang der Informationseinheit ab. Abhängig von der Struktur bzw. dem Informationsgehalt der Daten der Informationseinheit bzw. von deren Fehlerrate kann die Empfangseinheit 1 die Entscheidung, ob die Informationseinheit wichtig oder unwichtig ist, nach dem Empfang von mehreren Datenpaketen P1, P2 ... Pm, nach dem Empfang eines einzigen Datenpaketes P1 oder bereits nach dem Empfang eines Teiles des ersten Datenpaketes P1 treffen. Entscheidet die Entscheidungseinrichtung 2, daß die Informationseinheit unwichtig ist, so übermittelt sie der Empfangseinheit 1 ein Signal zum Ignorieren des Restes der Informationseinheit, also z. B. des Restes des ersten Datenpaketes P1 bzw. der restlichen noch nicht empfangenen Datenpakete Pn ... Pz. Das Signal zum Ignorieren des Restes der Informationseinheit kann beispielsweise einen Schalter oder ein Gate ansteuern, der die Empfangseinheit abschaltet, deaktiviert oder in einen Stand-by-Zustand versetzt.

Eine aus mehreren Datenpaketen bestehende Informationseinheit wird z. B. wie die Signalisierungsdaten im GSM-System in mehreren aufeinander folgenden Zeitrahmen übertragen. Dabei wird jeweils ein Datenpaket pro Zeitrahmen an das Endgerät übermittelt. Das erfindungsgemäße Endgerät kann bereits nach Empfang des ersten Datenpaketes entscheiden, ob die Informationseinheit wichtig ist oder nicht. Das ist insbesondere dann möglich, wenn die übertragenen Daten einer redundanten Kodierung unterzogen wurden, wodurch eine Verdoppelung der Datenbits der Informationseinheit erzielt wird. Da das erste Datenpaket in diesem Fall die doppelte Anzahl von Datenbits enthält, kann damit bereits nach dem Empfang des ersten Datenpaketes eine relativ zuverlässige 'Aussage getroffen werden, ob die gesamte Informationseinheit wichtig ist oder nicht. Treten auf dem Übertragungskanal zwischen dem Sender und dem empfangenden Endgerät Übertragungsfehler auf, so müssen zusätzliche Daten empfangen werden, um eine zuverlässige Entscheidung treffen zu können. Enthalten zu übertragende Signalisierungsdaten beispielsweise vier Datenpakete, so kann ab einer gewissen Fehlerrate nicht mehr aufgrund eines einzigen Datenpaketes entschieden werden, ob die Signalisierungsdaten wichtig sind oder nicht, sondern es muß auch das zweite Datenpaket empfangen werden, um eine zuverlässige Aussage zu ermöglichen.

Die Empfangseinrichtung 1 enthält einen Equalizer, der die Soft-Decision-Werte der empfangenen digitalen Daten zur Verfügung stellt. Die Soft-Decision-Werte geben eine Qualitätsinformation über die empfangenen digitalen Daten, d. h. sie ermöglichen eine Beurteilung, mit welcher Wahrscheinlichkeit die übertragenen Daten richtig übertragen wurden oder fehlerbehaftet sind. Die Entscheidungseinrichtung 2 verwendet diese Soft-Decision-Werte des bereits empfangenen Teiles einer Informationseinheit, um einen Wahrscheinlichkeitswert zu berechnen, ob die Informationseinheit unwichtig ist oder nicht. Die Entscheidungseinrichtung 2 entscheidet dabei, daß die Informationseinheit unwichtig ist, wenn die Wahrscheinlichkeit dafür genügend hoch ist, d. h. wenn der berechnete Wahrscheinlichkeitswert über einer vorgegebenen Wahrscheinlichkeitsschwelle liegt. Auf diese Weise kann verhindert werden, daß eine wichtige Informationseinheit wegen der fehlerhaften Übertragung einzelner Bits nicht erkannt wird und daß eine unwichtige Informationseinheit aus dem gleichen Grund nicht erkannt wird.

Die vorliegende Erfindung wird im weiteren anhand bevorzugter Ausführungsbeispiele erläutert, wobei dabei auf ein Endgerät Bezug genommen wird, das im GSM-System betrieben wird und die Informationseinheit in einem Übertragungskanal für Signalisierungsdaten übertragen wird. Bei lieser Konkretisierung können unwichtige Informationseinheiten beispielsweise Fülldaten sein, die dann von einer Basisstation an die Mobilstationen gesendet werden, wenn auf dem Signalisierungskanal keine Signalisierungsdaten zu übertragen sind. Das ist z. B. dann der Fall, wenn keine Verbindung vermittelt werden soll.

Unwichtige Informationseinheiten können aber auch Signalisierungsdaten enthalten, die das Endgerät nicht betreffen. Eine Basisstation sendet im GSM-System auf vier Datenpakete bzw. Zeitschlitze verteilte Signalisierungsdaten, wenn eine Verbindung an eine Mobilstation zu vermitteln ist. Diese Signalisierungsdaten werden jedoch von allen erreichbaren Mobilstationen empfangen. Diese Signalisierungsdaten signalisieren der betreffenden Mobilstation, daß eine Verbindung übermittelt werden soll. Die Übersendung der Signalisierungsdaten dauert dabei ca. 15 ms, wobei jede Mobilstation alle 0,5 bis 2 s hinhört bzw. aktiviert wird, um zu überprüfen, ob sie angerufen wird. Im Normalfall sind jedoch die Signalisierungsdaten nur für eine einzige Mobilstation bestimmt, und die anderen Mobilstationen sind davon nicht betroffen. Eine unwichtige Informationseinheit enthält damit beispielsweise Signalisierungsdaten, die für eine andere Mobilstation bestimmt sind.

Eine weitere Möglichkeit für unwichtige Informationseinheiten sind Daten, die das empfangende Endgerät bzw. die Mobilstation bereits einmal empfangen hat, die sie aber nicht mehr benötigt. Im GSM-System sind das z. B. Verbindungs-Anforderungen (Paging-Requests), die zur Erhöhung der Wahrscheinlichkeit der Erreichbarkeit mehrere Male hintereinander ausgesendet werden. Der letzte Fall-betrifft weiterhin auch die BCCH-Daten (Broadcast Control Channel), in denen die Konfiguration des Systems der Mobilstation mitgeteilt wird. Diese Daten werden in bis zu acht Nutzdaten-Paketen gesendet und ändern sich normalerweise extrem selten. Die Mobilstation muß diese Daten jedoch alle 30 Sekunden neu empfangen, für den Fall, daß die Basisstation umkonfiguriert wird. Auch diese Daten werden damit zu unwichtigen Daten im Sinne der vorliegenden Erfindung, wenn das Endgerät sie einmal empfangen hat und sie sich bei der wiederholten Übertragung nicht geändert haben.

In einem ersten bevorzugten Ausführungsbeispiel umfaßt die Entscheidungseinrichtung 2eine Speichereinrichtung mit vorab gespeicherten Informationen und eine Auswerteeinrichtung, die den bereits empfangenen Teil der Informationseinheit auf seinen Informationsgehalt auswertet und diesen Informationsgehalt mit den in der Speichereinrichtung gespeicherten Informationen vergleicht, um zu entscheiden, ob die Informationseinheit wichtig ist oder nicht. Es lassen sich damit aus den bereits empfangenen Daten und dem gespeicherten Vorwissen über konstante Bits oder Zusammenhänge zwischen einzelnen Bits solche Bits oder Zusammenhänge zwischen Bits auswerten, aus denen sich erkennen läßt, daß die Informationseinheit für das Endgerät unwichtig ist.

Dabei ist es insbesondere sinnvoll, jeweils einen bestimmten festgelegten Teil des Datenpaketes zu betrachten, in dem nach einer spezifischen Festlegung immer eine bestimmte Art von Daten angeordnet ist. Enthält beispielsweise im GSM-System das erste Byte einer Signalisierungsdaten-Informationseinheit Informationen über die Länge der Informationseinheit, so wertet die Auswerteeinheit diese Längeninformation aus und vergleicht sie mit in der Speichereinrichtung gespeicherten erlaubten maximalen und/oder minimalen Längenwerten. Ist die ausgewertete Länge der Informationseinheit zu kurz, um eine sinnvolle Information erhalten zu können, oder ist sie länger als die maximal erlaubte Länge, so kann der Rest der Informationseinheit ignoriert werden.

Es könnte aber auch das zweite Byte des Datenpaketes betrachtet werden, das im GSM-System das Nachrichtenformat enthält. Die Auswerteeinheit wertet dann die empfangenen Daten hinsichtlich des Nachrichtenformates aus und vergleicht sie mit in der Speichereinrichtung gespeicherten Nachrichtenformatinformationen, um herauszufinden, ob das Nachrichtenformat für das Endgerät für Interesse ist. Wenn die ausgewerteten Daten zeigen, daß die Informationseinheit eine Nachricht enthält, die das Endgerät nicht betrifft, so wird der Rest der Informationseinheit ignoriert. Weiterhin können auch Header-Informationen des übermittelten Datenpaketes untersucht werden, die den erwarteten Kontext festlegen, z. B. Layer 2 Header, Protocol Descriptor, usw. Ein Beispiel für eine Realisierung im GSM-System beim Empfang einer Füllnachricht im Verbindungs-Anforderungskanal (Paging Message) wird im nachfolgenden gegeben, wobei die ersten zwei Bytes den bereits empfangenen Teil der Füllnachricht darstellen. Die bekannten Daten sind dabei unterstrichen:
------ 01 reservierte Bits wegen der Kompatibilität zur Phase 1
000101-- Layer 2 Länge, wobei 5 ≤ Länge < 22
----0110 Protocol Discriminator
0000---- Skip-Indikator

Die oben dargestellten Bits werden von rechts nach links gelesen, wobei die beiden Bits in der ersten Zeile mit dem Wert "1" und 0" für die Phase 1 des GSM-Systems als Kodierungsformat definiert wurden, jedoch in der Phase 2 des GSM-Systems nicht mehr benötigt werden. Um dennoch eine Kompatibilität zwischen in Phase 1 betriebenen Systemen und in Phase 2 betriebenen Systemen zu gewährleisten, werden diese beiden Bits weiterhin auch in Phase 2 des GSM-Systems weiter in der gezeigten Weise übertragen. In der zweiten Zeile sind die sechs sich an die beiden in der ersten Zeile anschließenden Bits dargestellt, die die Längeninformation der Layer 2 Länge enthalten. Bei Betrachtung der Längeninformation wird im dargestellten Beispiel aufgrund des unterstrichenen sechsten Bits mit dem "0"-Wert entschieden, ob die Nachricht unwichtig ist oder nicht. Damit ergeben die beiden in der ersten Zeile dargestellten reservierten Bits gemeinsam mit den in der zweiten Zeile dargestellten sechs Längenbits das erste Byte des bereits empfangenen Teils der Füllnachricht. Die in der dritten Zeile dargestellten nächsten vier Bits sind der Protocol Discriminator und dienen zur Aktivierung des entsprechenden Layers in der Mobilstation. Die in der vierten Zeile dargestellten letzten vier Bits des zweiten Bytes sind in der Phase 2 des GSM-Systems noch nicht spezifiziert und für je Erweiterungen in Phase 3 bzw. Phase 4 reserviert. Falls hier andere als die dargestellten "0000"-Werte auftauchen, wird die ankommende Informationseinheit ignoriert.

Da im Umfeld der Layer 2 Länge sehr viele bekannte Bits vorhanden sind, läßt sich mit der im GSM-System angewandten Kodierung die Layer 2 Länge mit einer verbleibenden Unsicherheit bestimmen: Die Länge ist entweder 5, dann kann die Informationseinheit nur eine Füllnachricht sein, die von dem Endgerät bzw. der Mobilstation ignoriert wird, oder die Länge ist 23, das ist eine illegale Länge und die Mobilstation ignoriert die Informationseinheit ebenfalls. Sollte eines oder mehrere der hier als bekannt gekennzeichneten Bits einen anderen als den hier gezeigten Wert haben, dann wird die Informationseinheit von der Mobilstation ebenfalls als ungültig erkannt und ignoriert.

Das Endgerät und das Verfahren des ersten Ausführungsbeispieles eignet sich besonders bei Daten, die mit einem Kodierungsverfahren kodiert wurden, bei dem die Nutz-Bits nur einen gewissen, relativ eng lokalisierten Teil der übertragenen kodierten Bits beeinflussen. Ein Beispiel dafür sind die im GSM-System verwendeten Convolutional Codes mit einer Einflußlänge von ca. 8, d. h. ein Nutzdatenbit beeinflußt ca. 8 kodierte Bits. Wird die Informationseinheit in vier Datenpaketen übertragen, so werden damit von den acht beeinflußten kodierten Bits zwei Bits im ersten Datenpaket übertragen. Der Zusammenhang zwischen diesen beiden Bits erlaubt dann einen Rückschluß auf die gesamte Informationseinheit.

In einem zweiten bevorzugten Ausführungsbeispiel umfaßt die Entscheidungseinrichtung 2 eine Speichereinrichtung mit vorab gespeicherten Informationen und vergleicht den bereits empfangenen Teil der Informationseinheit mit den in der Speichereinrichtung gespeicherten Informationen, um zu entscheiden, ob die Informationseinheit wichtig ist oder nicht. Im Unterschied zum ersten Ausführungsbeispiel werden die empfangenen Daten dabei nicht hinsichtlich ihres Informationsgehaltes ausgewertet.

Beispielsweise kann in der Speichereinheit ein Datenpaket oder eine Informationseinheit mit Leernachrichten gespeichert sein, die in einem Signalisierungskanal immer dann von einer Basisstation übertragen werden, wenn keine Signalisierungsdaten zu übertragen sind. Stimmt der bisher empfangene Teil der Informationseinheit mit dem entsprechenden gespeicherten Teil einer erwarteten Informationseinheit mit Leerdaten überein, so wird angenommen, daß die ankommende Informationseinheit tatsächlich Leerdaten enthält. Die Empfangseinheit 1 ignoriert daraufhin den Rest der Informationseinheit bzw. bricht den Empfang ab.

Abhängig von der Kodierungsmethode muß die Annahme, daß tatsächlich eine Informationseinheit mit Leerdaten ankommt, theoretisch nicht unbedingt korrekt sein. Ist jedoch die Wahrscheinlichkeit dafür, daß eine Informationseinheit mit Leerdaten vorliegt, ausreichend hoch, so ist das Vorgehen ausreichend zuverlässig. Das Verfahren gemäß dem zweiten Ausführungsbeispiel entspricht in etwa dem Vergleich von Checksummen, auch wenn es sich bei den verglichenen Daten nicht exlizit um Checksummen handelt. Die Basisstationen des GSM-Systems senden in der Regel immer identische Leerdaten-Datenpakete aus, so daß das zweite Ausführungsbeispiel auf diesem Gebiet vorteilhaft einsetzbar ist.

Das Endgerät und das Verfahren gemäß dem zweiten Ausführungsbeispiel eignen sich besonders für Daten, die mit Kodierungsverfahren kodiert sind, bei denen die Nutzbits die übertragenen kodierten Bits in einem sehr großen Bereich beeinflussen. Ein Beispiel dafür sind die im GSM-System verwendeten Fire-Codes, bei denen eine Checksumme mit einer zusätzlichen Möglichkeit zur Fehlerbehebung verwendet wird, und in denen ein Nutzdatenbit bis zu 80 kodierte Bits beeinflußt. Es können aber auch andere Checksummen in dem zweiten Ausführungsbeispiel verwendet werden. In dem zweiten Ausführungsbeispiel ist jedoch eine Voraussetzung, daß die in der Speichereinrichtung vorab gespeicherten Informationen vollständig bekannt, d. h. vollständig spezifiziert sind.

In einem dritten Ausführungsbeispiel der vorliegenden Erfindung umfaßt die Entscheidungseinrichtung 2 eine temporäre Speichereinheit, in der ein Teil einer vorher empfangenen Informationseinheit gespeichert wird, und den bereits empfangenen Teil einer aktuellen Informationseinheit mit dem in der Speichereinrichtung gespeicherten Teil der vorher empfangenden Informationseinheit vergleicht, um zu entscheiden, ob die aktuelle Informationseinheit wichtig ist oder nicht. Das ist insbesondere dann von Vorteil, wenn Teile der oder die gesamte in der Speichereinrichtung zu speichernden Informationseinheit nicht von vornherein festliegen. Da z. B. im GSM-System der Inhalt von Fülldaten-Paketen nicht festgelegt ist, können hierbei Teile der oder die gesamten bereits empfangenen Fülldaten-Pakete in der temporären Speichereinrichtung gespeichert werden, so daß auch Veränderungen in den Fülldaten bzw. Leerdaten z. B. beim Wechsel einer Basisstation berücksichtigt werden können. Alternativ oder zusätzlich können in der temporären Speichereinrichtung außerdem andere Datenpakete gespeichert werden, die vorher empfangen wurden und noch nicht unwichtig waren, jedoch unwichtig geworden sind, da sie z. B. im Endgerät nicht mehr benötigt werden, um Wiederholungen des Empfangs von bereits empfangenen, aber nicht mehr relevanten Daten zu vermeiden.

In einem vierten Ausführungsbeispiel des erfindungsgemäßen Endgerätes und des erfindungsgemäßen Verfahrens enthält der bereits empfangene Teil der Informationseinheit Informationen darüber, ob die Informationseinheit wichtig ist oder nicht. Die Entscheidungseinrichtung 2 umfaßt dabei eine Auswerteeinheit, die diese Informationen auswertet. Diesem Ausführungsbeispiel liegt der Gedanke zugrunde, anhand des ersten Teils der kodierten Bits einer Informationseinheit die Art der Informationseinheit bereits im ersten Datenpaket als solche kenntlich zu machen. Dazu müssen z. B. Leerdatenpakete und Nutzdatenpakete hinreichend unterschiedlich definiert werden oder gegebenenfalls zusätzliche, für die Signalisierung an sich nicht benötigte Daten eingefügt werden, die für die Leerdaten- und Nutzdatenpakete so unterschiedlich sind, daß der Unterschied bereits anhand des ersten Teils der Informationseinheit erkannt werden kann. Alternativ kann man zusätzlich zu den entsprechend spezifierten Daten noch weitere Daten anfügen, die bereits eine Unterscheidung ermöglichen.

Im konkreten Fall des GSM-Systems könnte folgende Erweiterung vorgenommen werden. Derzeit werden die sogenannten Stealing Flags, die je zwei Bits pro Datenpaket ausmachen, unter anderem im Kanal CCCH (Common Control Channel) nicht benutzt. Die Stealing Flags dienen ausschließlich im FACCH (Fast Associated Control Channel) dazu, zwischen Nutzdaten und Signalisierungsdaten zu unterscheiden, z. B. während eines Hand-overs. Im CCCH kann festgelegt werden, daß die Basisstation anhand dieser Stealing Flags signalisiert, ob eine Nutzinformation oder Leer- bzw. Fülldaten vorliegen. Detektiert ein Endgerät nach dem Empfang des ersten Datenpaketes ein oder beide Stealing Flags, so braucht das Datenpaket nicht weiter ausgewertet werden. Das erspart zusätzlich die Bestimmung der übrigen Bits in diesem Datenpaket. Bei den BCCH-Daten (Broadcast Control Channel) werden diese Bits dann gesetzt, wenn sich die Information innerhalb der letzten 30 Sekunden geändert hat, also von allen erreichbaren Endgeräten bzw. Mobilstationen neu gelesen werden muß.

Verfügt das Endgerät über eine entsprechend schnelle Datenverarbeitung, so kann bereits während des Empfangs des ersten Datenpaketes unmittelbar nach der Detektion von einem oder beider Stealing Flags dieses Datenpaketes der Empfänger noch während der Übertragung des Rests des Datenpaketes abgeschaltet werden. Das trifft auch für das erste, das zweite und das dritte Ausführungsbeispiel zu, bei denen bereits unmittelbar nach der Detektion eines bereits empfangenen Teiles eines ersten Datenpaketes der Informationseinheit mittels einer entsprechend schnellen Datenverarbeitung der Empfänger noch während der Übertragung des Restes des ersten Datenpaketes abgeschaltet werden kann. Zumindest kann jedoch bei allen Ausführungsbeispielen die Auswertung des Restes des ersten Datenpaketes beendet werden, sobald die Entscheidungseinrichtung über den bereits empfangenen Teil der Informationseinheit entschieden und seine Wichtigkeit eingeschätzt hat. Das spart viel Aufwand in der digitalen Signalverarbeitung des Equalizer-Algorithmus in der Empfangseinrichtung und verringert den Stromverbrauch.

## Patentansprüche

1. Endgerät für den digitalen Mobilfunk, mit
einer Empfangseinrichtung (1) zum Empfangen von digitalen Datenpaketen und Bereitstellen von Soft-Decision-Werten empfangener Datenpakete, und
einer Entscheidungseinrichtung (2), die vor dem vollständigen Empfang einer aus einem oder mehreren Datenpaketen bestehenden Informationseinheit auf der Basis eines bereits empfangenen Teiles der Informationseinheit entscheidet, ob die Informationseinheit wichtig ist oder nicht, und bei einer Entscheidung, daß die *Informationseinheit* unwichtig ist, die Empfangseinheit (1) zum Ignorieren des Restes der Informationseinheit veranlaßt,
**dadurch gekennzeichnet,**
**daß** die Entscheidungseinrichtung (2) aus in der Empfangseinrichtung (1) erhaltenen Soft-Decision-Werten des bereits empfangenen Teiles der Informationseinheit einen Wahrscheinlichkeitswert berechnet, der ein Maß dafür ist, ob die Informationseinheit unwichtig ist, und entscheidet, daß die Informationseinheit unwichtig ist, wenn der berechnete Wahrscheinlichkeitswert über einer vorgegebenen Wahrscheinlichkeitsschwelle liegt.

2. Endgerät für den digitalen Mobilfunk gemäß Anspruch 1,
**dadurch gekennzeichnet,**
**daß** das Endgerät im GSM-System betrieben wird und die Informationseinheit in einem Übertragungskanal für Signalisierungsdaten übertragen wird, wobei unwichtige Informationseinheiten Fülldaten oder im Endgerät nicht bzw. nicht mehr benötigte Signalisierungsdaten sind.

3. Endgerät für den digitalen Mobilfunk gemäß Anspruch 1 oder 2,
**dadurch gekennzeichnet,**
**daß** die Entscheidungseinrichtung (2) eine Speichereinrichtung mit vorab gespeicherten Informationen und eine Auswerteeinrichtung umfaßt, die den bereits empfangenen Teil der Informationseinheit auf seinen Informationsgehalt auswertet und diesen Informationsgehalt mit den in der Speichereinrichtung gespeicherten Informationen vergleicht, um zu entscheiden, ob die Informationseinheit wichtig ist oder nicht.

4. Endgerät für den digitalen Mobilfunk gemäß Anspruch 3,
**dadurch gekennzeichnet,**
**daß** der bereits empfangene Teil der Informationseinheit eine Information über die Länge der Informationseinheit enthält, wobei die Auswerteeinheit diese Information über die Länge mit in der Speichereinrichtung gespeicherten erlaubten maximalen und/oder minimalen Längenwerten vergleicht.

5. Endgerät für den digitalen Mobilfunk gemäß Anspruch 3,
**dadurch gekennzeichnet,**
**daß** der bereits empfangene Teil der Informationseinheit eine Information über das Format der Informationseinheit enthält, wobei die Auswerteeinheit diese Information über das Format mit in der Speichereinrichtung gespeicherten erwarteten Formatwerten vergleicht.

6. Endgerät für den digitalen Mobilfunk gemäß Anspruch 1 oder 2,
**dadurch gekennzeichnet,**
**daß** die Entscheidungseinrichtung eine Speichereinrichtung mit vorab gespeicherten Informationen umfaßt und den bereits empfangenen Teil der Informationseinheit mit den in der Speichereinrichtung gespeicherten Informationen vergleicht, um zu entscheiden, ob die Informationseinheit wichtig ist oder nicht.

7. Endgerät für den digitalen Mobilfunk gemäß Anspruch 6,
**dadurch gekennzeichnet,**
**daß** die in der Speichereinrichtung vorab gespeicherten Informationen einen dem bereits empfangenen Teil der Informationseinheit entsprechenden Teil einer erwarteten unwichtigen Informationseinheit enthalten.

8. Endgerät für den digitalen Mobilfunk gemäß Anspruch 1 oder 2,
**dadurch gekennzeichnet,**
**daß** die Entscheidungseinrichtung (2) eine temporäre Speichereinrichtung umfaßt, in der ein Teil einer vorher empfangenen Informationseinheit gespeichert wird, und den bereits empfangenen Teil einer aktuellen Informationseinheit mit dem in der Speichereinrichtung gespeicherten Teil der vorher empfangenen Informationseinheit vergleicht, um zu entscheiden, ob die aktuelle Informationseinheit wichtig ist oder nicht.

9. Endgerät für den digitalen Mobilfunk gemäß Anspruch 1 oder 2,
**dadurch gekennzeichnet,**
**daß** der bereits empfangene Teil der Informationseinheit Informationen darüber enthält, ob die Informationseinheit wichtig ist oder nicht, und die Entscheidungseinrichtung (2) eine Auswerteeinheit umfaßt, die diese Informationen auswertet, um zu entscheiden, ob die Informationseinheit wichtig ist oder nicht.

10. Endgerät für den digitalen Mobilfunk gemäß Anspruch 9,
**dadurch gekennzeichnet,**
**daß** das Endgerät im GSM-System betrieben wird und die Informationseinheit einem Signalisierungskanal außer dem FACCH-Kanal zugeordnet ist, wobei der bereits empfangene Teil der Informationseinheit aus den Stealing Flags dieses Signalisierungs-Kanals besteht.

11. Verfahren zum Auswerten von in einem Endgerät für den digitalen Mobilfunk empfangenen Daten, mit den Schritten Empfangen von digitalen Datenpaketen,
Bereitstellen von Soft-Decision-Werten empfangener Datenpakete, und
Entscheiden auf der Basis eines bereits empfangenen Teiles einer aus einem oder mehreren Datenpaketen bestehenden Informationseinheit vor dem vollständigen Empfang der Informationseinheit, ob die Informationseinheit wichtig ist oder nicht, und
Ignorieren des Restes der Informationseinheit bei einer Entscheidung, daß die Informationseinheit unwichtig ist,
**dadurch gekennzeichnet,**
**daß** aus Soft-Decision-Werten des bereits empfangenen Teiles der Informationseinheit ein Wahrscheinlichkeitswert berechnet wird, der ein Maß dafür ist, ob die Informationseinheit unwichtig ist, und entschieden wird, daß die Informationseinheit unwichtig ist, wenn der berechnete Wahrscheinlichkeitswert über einer vorgegebenen Wahrscheinlichkeitsschwelle liegt.

12. Verfahren zum Auswerten empfangener Daten gemäß Anspruch 11,
**dadurch gekennzeichnet,**
**daß** das Endgerät im GSM-System betrieben wird und die Informationseinheit in einem Übertragungskanal für Signalisierungsdaten übertragen werden, wobei unwichtige Informationseinheiten Fülldaten oder im Endgerät nicht bzw. nicht mehr benötigte Signalisierungsdaten sind.

13. Verfahren zum Auswerten von empfangenen Daten gemäß Anspruch 11 bis 12,
**dadurch gekennzeichnet,**
**daß** vor der Entscheidung eine Auswertung des bereits empfangenen Teiles der Informationseinheit auf seinen Informationsgehalt folgt, und bei der Entscheidung, ob die Informationseinheit wichtig ist oder nicht, dieser Informationsgehalt mit in dem Endgerät vorab gespeicherten Informationen verglichen wird.

14. Verfahren zum Auswerten von empfangenen Daten gemäß Anspruch 13,
**dadurch gekennzeichnet,**
**daß** der bereits empfangene Teil der Informationseinheit eine Information über die Länge der Informationseinheit enthält, wobei bei der Entscheidung, diese Information über die Länge mit im Endgerät vorab gespeicherten erlaubten maximalen und/oder minimalen Längenwerten vergleicht.

15. Verfahren zum Auswerten von empfangenen Daten gemäß Anspruch 13,
**dadurch gekennzeichnet,**
**daß** der bereits empfangene Teil der Informationseinheit eine Information über das Format der Informationseinheit enthält, wobei bei der Entscheidung, diese Information über das Format mit in dem Endgerät vorab gespeicherten erwarteten Formatwerten verglichen wird.

16. Verfahren zum Auswerten von empfangenen Daten gemäß Anspruch 11 oder 12,
**dadurch gekennzeichnet,**
**daß** bei der Entscheidung, ob die Informationseinheit wichtig ist oder nicht, der bereits empfangene Teil der Informationseinheit mit in dem Endgerät vorab gespeicherten Informationen verglichen wird.

17. Verfahren zum Auswerten von empfangenen Daten gemäß Anspruch 16,
**dadurch gekennzeichnet,**
**daß** die in dem Endgerät vorab gespeicherten Informationen einen dem bereits empfangenen Teil der Informationseinheit entsprechenden Teil einer erwarteten unwichtigen Informationseinheit enthalten.

18. Verfahren zum Auswerten von empfangenen Daten gemäß Anspruch 11 oder 12,
**dadurch gekennzeichnet,**
**daß** bei der Entscheidung, ob eine aktuelle Informationseinheit wichtig ist oder nicht, der bereits empfangene Teil der aktuellen Informationseinheit mit einem in dem Endgerät temporär gespeicherten Teil einer vorher empfangenen Informationseinheit verglichen wird.

19. Verfahren zum Auswerten von empfangenen Daten gemäß Anspruch 11 oder 12,
**dadurch gekennzeichnet,**
**daß** der bereits empfangene Teil der Informationseinheit Informationen darüber enthält, ob die Informationseinheit wichtig ist oder nicht, und bei der Entscheidung, ob die Informationseinheit wichtig ist oder nicht, diese Informationen ausgewertet werden.

20. Verfahren zum Auswerten von empfangenen Daten gemäß Anspruch 19,
**dadurch gekennzeichnet,**
**daß** das Endgerät im GSM-System betrieben wird und die Informationseinheit einem Signalisierungs-Kanal außer dem FACCH-Kanal zugeordnet ist, wobei der bereits empfangene Teil der Informationseinheit aus den Stealing Flags dieses Signalisierungs-Kanales besteht.

## Claims

1. Terminal for digital mobile radio, having a receiving device (1) for receiving digital data packets and for providing soft-decision values from received data packets and
a decision device (2) which, before complete reception of an information unit which comprises one or more data packets, uses a part of the information unit which has already been received to decide whether the information unit is or is not important and, if the decision is that the information unit is not important, causes the receiving unit (1) to ignore the rest of the information unit,
**characterized**
**in that** the decision device (2) uses the soft-decision values, received in the receiving device (1), from the already received part of the information unit to calculate a probability value which is a measure of whether the information unit is unimportant, and decides that the information unit is unimportant if the calculated probability value is greater than a predetermined probability threshold.

2. Terminal for digital mobile radio according to Claim 1,
**characterized**
**in that** the terminal is operated in the GSM system, and the information unit is transmitted in a transmission channel for signalling data, in which case information units which are not important are filling data or signalling data which is not required, or is no longer required, in the terminal.

3. Terminal for digital mobile radio according to Claim 1 or 2,
**characterized**
**in that** the decision device (2) comprises a memory device having previously stored information, and an evaluation device which evaluates the information content of the already received part of the information unit, and compares this information content with the information stored in the memory device, in order to decide whether the information unit is or is not important.

4. Terminal for digital mobile radio according to Claim 3,
**characterized**
**in that** the already received part of the information unit contains information about the length of the information unit, in which case the evaluation unit compares this information about the length with permitted maximum and/or minimum length values which are stored in the memory device.

5. Terminal for digital mobile radio according to Claim 3,
**characterized**
**in that** the already received part of the information unit contains information about the format of the information unit, in which case the evaluation unit compares this information about the format with expected format values which are stored in the memory device.

6. Terminal for digital mobile radio according to Claim 1 or 2,
**characterized**
**in that** the decision device comprises a memory device having previously stored information, and compares the already received part of the information unit with the information stored in the memory device, in order to decide whether the information unit is or is not important.

7. Terminal for digital mobile radio according to Claim 6,
**characterized**
**in that** the information previously stored in the memory device contains a part (which corresponds to the already received part of the information unit) of an expected information unit which is not important.

8. Terminal for digital mobile radio according to Claim 1 or 2,
**characterized**
**in that** the decision device (2) comprises a temporary memory device in which a part of a previously received information unit is stored, and compares the already received part of a current information unit with the part of the previously received information unit which is stored in the memory device, in order to decide whether the current information unit is or is not important.

9. Terminal for digital mobile radio according to Claim 1 or 2,
**characterized**
**in that** the already received part of the information unit contains information as to whether the information unit is or is not important, and the decision device (2) comprises an evaluation unit which evaluates this information in order to decide whether the information unit is or is not important.

10. Terminal for digital mobile radio according to Claim 9,
**characterized**
**in that** the terminal is operated in the GSM system, and the information unit is assigned to a signalling channel other than the FACCH channel, in which case the already received part of the information unit comprises the stealing flags of this signalling channel.

11. Method for evaluating data received in a terminal for digital mobile radio, comprising the steps of receiving digital data packets,
of providing soft-decision values from received data packets, and
using an already received part of an information unit which comprises one or more data packets to decide, before complete reception of the information unit, whether the information unit is or is not important, and
ignoring the rest of the information unit if the decision is that the information unit is not important,
**characterized**
**in that** the soft-decision values from the already received part of the information unit are used to calculate a probability value which is a measure of whether the information unit is unimportant, and to decide that the information unit is unimportant if the calculated probability value is greater than a predetermined probability threshold.

12. Method for evaluating received data according to Claim 11,
**characterized**
**in that** the terminal is operated in the GSM system and the information unit are transmitted in a transmission channel for signalling data, in which case information units which are not important are filling data or signalling data which is not required, or is no longer required, in the terminal.

13. Method for evaluating received data according to Claims 11 to 12,
**characterized**
**in that**, before the decision, an evaluation of the information content of the already received part of the information unit is carried out and, for making the decision as to whether the information unit is or is not important, this information content is compared with information previously stored in the terminal.

14. Method for evaluating received data according to Claim 13,
**characterized**
**in that** the already received part of the information unit contains information about the length of the information unit in which case, for making the decision, this information about the length is compared with permitted maximum and/or minimum length values which have been previously stored in the terminal.

15. Method for evaluating received data according to Claim 13,
**characterized**
**in that** the already received part of the information unit contains information about the format of the information unit, in which case, for making the decision, this information about the format is compared with expected format values which have previously been stored in the terminal.

16. Method for evaluating received data according to Claim 11 or 12,
**characterized**
**in that**, for making the decision as to whether the information unit is or is not important, the already received part of the information unit is compared with information which has previously been stored in the terminal.

17. Method for evaluating received data according to Claim 16,
**characterized**
**in that** the information previously stored in the terminal contains a part (which corresponds to the already received part of the information unit) of an expected information unit which is not important.

18. Method for evaluating received data according to Claim 11 or 12,
**characterized**
**in that,** for making the decision as to whether a current information unit is or is not important, the already received part of the current information unit is compared with a part (which has been temporarily stored in the terminal) of a previously received information unit.

19. Method for evaluating received data according to Claim 11 or 12,
**characterized**
**in that** the already received part of the information unit contains information relating to whether the information unit is or is not important, and this information is evaluated for making the decision as to whether the information unit is or is not important.

20. Method for evaluating received data according to Claim 19,
**characterized**
**in that** the terminal is operated in the GSM system, and the information unit is assigned to a signalling channel other than the FACCH channel, in which case the already received part of the information unit comprises the stealing flags of this signalling channel.

## Revendications

1. Terminal pour la radiocommunication numérique mobile, comportant un dispositif (1) de réception pour la réception de paquets de données numériques et la mise à disposition de valeurs de Soft-Decision de paquets de données reçues, et
un dispositif (2) de décision, qui décide avant la réception complète d'une unité d'information constituée d'un ou plusieurs paquets de données, sur la base d'une partie déjà reçue de l'unité d'information, si l'unité d'information est importante ou ne l'est pas, et, dans le cas d'une décision statuant que l'unité d'information n'est pas importante, fait que l'unité (1) de réception ne se préoccupe pas du reste de l'unité d'information,
**caractérisé**
**en ce que** le dispositif (2) de décision calcule à partir des valeurs de Soft-Decision, obtenues dans le dispositif (1) de réception, de la partie déjà reçue de l'unité d'information, une valeur de probabilité qui est une mesure pour le fait que l'unité d'information n'est pas importante, et décide que l'unité d'information n'est pas importante si la valeur de probabilité calculée est supérieure à un seuil de probabilité prescrit.

2. Terminal pour la radiocommunication numérique mobile suivant la revendication 1,
**caractérisé**
**en ce que** le terminal fonctionne dans le système GSM et l'unité d'information est transmise dans une voie de transmission pour données de signalisation, des unités d'informations non importantes étant des données de remplissage ou des données de signalisation dont le terminal n'a pas ou plus besoin.

3. Terminal pour la radiocommunication numérique mobile suivant la revendication 1 ou 2,
**caractérisé**
**en ce que** le dispositif (2) de décision comprend un dispositif de mémorisation comportant des informations mises en mémoire à l'avance et un dispositif d'exploitation qui exploite la partie déjà reçue de l'unité d'information du point de vue de son contenu d'information et qui compare ce contenu d'information aux informations mises en mémoire dans le dispositif de mémorisation pour décider si l'unité d'information est importante ou ne l'est pas.

4. Terminal pour la radiocommunication numérique mobile suivant la revendication 3,
**caractérisé**
**en ce que** la partie déjà reçue de l'unité d'information contient une information sur la longueur de l'unité d'information, l'unité d'exploitation comparant cette information sur la longueur aux valeurs de longueurs maximales et/ou minimales permises mises en mémoire dans le dispositif de mémorisation.

5. Terminal pour la radiocommunication numérique mobile suivant la revendication 3,
**caractérisé**
**en ce que** la partie déjà reçue de l'unité d'information contient une information sur le format de l'unité d'information, l'unité d'exploitation comparant cette information sur le format a des valeurs de format attendues mises en mémoire dans le dispositif de mémorisation.

6. Terminal pour la radiocommunication numérique mobile suivant la revendication 1 ou 2,
**caractérisé**
**en ce que** le dispositif de décision comprend un dispositif de mémorisation comportant des informations mises en mémoire à l'avance et compare la partie déjà reçue de l'unité d'information à des informations mises en mémoire dans le dispositif de mémorisation afin de décider si l'unité d'information est importante ou ne l'est pas.

7. Terminal pour la radiocommunication numérique mobile suivant la revendication 6,
**caractérisé**
**en ce que** les informations mises en mémoire à l'avance dans le dispositif de mémorisation contiennent une partie d'une unité d'information non importante attendue correspondant à la partie déjà reçue de l'unité d'information.

8. Terminal pour la radiocommunication numérique mobile suivant la revendication 1 ou 2,
**caractérisé**
**en ce que** le dispositif (2) de décision comprend un dispositif de mémorisation temporaire dans lequel une partie d'une unité d'information reçue antérieurement est mémorisée et compare la partie déjà reçue d'une unité d'information du moment à la partie de l'unité d'information reçue antérieurement mise en mémoire dans le dispositif de mémorisation pour décider si l'unité d'information du moment est importante ou ne l'est pas.

9. Terminal pour la radiocommunication numérique mobile suivant la revendication 1 ou 2,
**caractérisé**
**en ce que** la partie déjà reçue de l'unité d'information contient des informations sur le fait que l'unité d'information est importante ou ne l'est pas, et le dispositif (2) de décision comprend une unité d'exploitation qui exploite ces informations pour décider si l'unité d'information est importante ou ne l'est pas.

10. Terminal pour la radiocommunication numérique mobile suivant la revendication 9,
**caractérisé**
**en ce que** le terminal fonctionne dans le système GSM et l'unité d'information est associée à une voie de signalisation autre que la voie FACCH, la partie déjà reçue de l'unité d'information étant constituée des Stealing Flags de cette voie de signalisation.

11. Procédé d'exploitation de données reçues dans un terminal pour la radiocommunication numérique mobile, comportant les étapes de
réception de paquets de données numériques,
mise à disposition de valeurs de Soft-Decision de paquets de données reçues, et
décision sur la base d'une partie déjà reçue d'une unité d'information constituée d'un ou plusieurs paquets de données, avant la réception complète de l'unité d'information, sur le point de savoir si l'unité d'information est importante ou ne l'est pas, et
absence de prise en compte du reste de l'unité d'information pour une décision statuant que l'unité d'information n'est pas importante,
**caractérisé**
**en ce qu'**il est calculé à partir de valeurs de Soft-Decision de la partie déjà reçue de l'unité d'information une valeur de probabilité qui est une mesure du fait que l'unité d'information n'est pas importante, et il est décidé que l'unité d'information n'est pas importante, si la valeur de probabilité calculée est supérieure à un seuil de probabilité prescrit.

12. Procédé d'exploitation de données reçues suivant la revendication 11,
**caractérisé**
**en ce que** le terminal fonctionne dans le système GSM et l'unité d'information est transmise dans une voie de transmission pour des données de signalisation, des unités d'informations non importantes étant des données de remplissage ou des données de signalisation dont le terminal n'a pas ou plus besoin.

13. Procédé d'exploitation de données reçues suivant les revendications 11 à 12,
**caractérisé**
**en ce qu'**il s'effectue avant la décision une exploitation de la partie déjà reçue de l'unité d'information du point de vue de son contenu d'information et, pour la décision consistant à savoir si l'unité d'information est importante ou ne l'est pas, ce contenu d'information est comparé à des informations mises en mémoire à l'avance dans le terminal.

14. Procédé d'exploitation de données reçues suivant la revendication 13,
**caractérisé**
**en ce que** la partie déjà reçue de l'unité d'information contient une information sur la longueur de l'unité d'information, cette information sur la longueur étant, pour la décision, comparée à des valeurs de longueurs maximales et/ou minimales permises mises en mémoire à l'avance dans le terminal.

15. Procédé d'exploitation de données reçues suivant la revendication 13,
**caractérisé**
**en ce que** la partie déjà reçue de l'unité d'information contient une information sur le format de l'unité d'information, cette information sur le format étant, pour la décision, comparée à des valeurs de format attendues mises en mémoire à l'avance dans le terminal.

16. Procédé d'exploitation de données reçues suivant la revendication 11 ou 12,
**caractérisé**
**en ce que** pour la décision consistant à savoir si l'unité d'information est importante ou ne l'est pas, la partie déjà reçue de l'unité d'information est comparée aux informations mises en mémoire à l'avance dans le terminal.

17. Procédé d'exploitation de données reçues suivant la revendication 16,
**caractérisé**
**en ce que** les informations mises en mémoire à l'avance dans le terminal contiennent une partie d'une unité d'information non importante attendue correspondant à la partie déjà reçue de l'unité d'information.

18. Procédé d'exploitation de données reçues suivant la revendication 11 ou 12,
**caractérisé**
**en ce que**, pour la décision de savoir si une unité d'information du moment est importante ou ne l'est pas, la partie déjà reçue de l'unité d'information du moment est comparée à une partie, mise en mémoire de façon temporaire dans le terminal, d'une unité d'information reçue antérieurement.

19. Procédé d'exploitation de données reçues suivant la revendication 11 ou 12,
**caractérisé**
**en ce que** la partie déjà reçue de l'unité d'information contient des informations sur le fait que l'unité d'information est importante ou ne l'est pas, et, pour la décision de savoir si l'unité d'information est importante ou de l'est pas, ces informations sont exploitées.

20. Procédé d'exploitation de données reçues suivant la revendication 19,
**caractérisé**
**en ce que** le terminal fonctionne dans le système GSM et en ce que l'unité d'information est associée à une voie de signalisation autre que la voie FACCH, la partie déjà reçue de l'unité d'information étant constituée des Stealing Flags de cette voie de signalisation.
